# EUROPÄISCHE PATENTSCHRIFT

(11) **EP 2 966 281 B1**
(45) Veröffentlichungstag und Bekanntmachung des Hinweises auf die Patenterteilung: **13.12.2017**
(21) Anmeldenummer: 15172726.0
(22) Anmeldetag: 18.06.2015
(51) Int. Cl.: F02D 9/10, F16K 31/50, F16K 1/22

(54) **KOPPLUNGSEINRICHTUNG**
COUPLING DEVICE
DISPOSITIF DE COUPLAGE

(30) Priorität: 09.07.2014 DE 102014213372
(43) Veröffentlichungstag der Anmeldung: 13.01.2016
(73) Patentinhaber: Mahle International GmbH, 70376 Stuttgart (DE)
(72) Erfinder: Kaiser, Sven Alexander, 71364 Winnenden (DE)
(74) Vertreter: BRP Renaud & Partner mbB Rechtsanwälte Patentanwälte Steuerberater

(56) Entgegenhaltungen:
- EP-A1- 1 098 124
- EP-A1- 2 775 121
- DE-U1- 9 406 919
- FR-A1- 2 715 437

## Beschreibung

Die vorliegende Erfindung betrifft eine Kopplungseinrichtung für eine Klappeneinrichtung zum Steuern einer Fluidströmung einer Brennkraftmaschine, mit den Merkmalen des Oberbegriffs des Anspruchs 1. Die Erfindung betrifft außerdem eine mit einer solchen Kopplungseinrichtung ausgestattete Klappeneinrichtung.

Aus der DE 10 2007 003 317 A1 ist eine Klappeneinrichtung bekannt, bei der ein Klappengehäuse einen von einer Abgasströmung in einer Axialrichtung durchströmbaren Kanalabschnitt in einer Umfangsrichtung umschließt. Zum Steuern eines durchströmbaren Querschnitts des Kanalabschnitts ist im Klappengehäuse eine Klappe um eine quer zur Axialrichtung verlaufende Schwenkachse verschwenkbar angeordnet. Eine Stelleinrichtung zum Antreiben der Klappe weist eine linear verstellbare Antriebswelle auf, wobei eine Kopplungseinrichtung vorgesehen ist, die eine drehfest mit der Klappe verbundene, koaxial zur Schwenkachse verlaufende Klappenwelle mit der koaxial zur Schwenkachse ausgerichteten Antriebswelle koppelt, derart, dass sie lineare Bewegungen der Antriebswelle in Drehbewegungen der Klappenwelle umwandelt. Die bekannte Klappeneinrichtung arbeitet dabei mit einem elektromotorischen Antrieb zum linearen Verstellen der Antriebswelle.

Ein Linear-Schrittmotor mit axial bewegbarer Antriebswelle ist beispielsweise aus der DE 199 41 309 A1 bekannt.

Aus der DE 100 15 978 A1 ist eine weitere Klappeneinrichtung bekannt, bei der ein Rotationsmotor verwendet wird, um eine Antriebswelle drehend anzutreiben. Dabei ist die Antriebswelle als Spindel konfiguriert, auf die eine Mutter aufgesetzt ist, die einen davon radial abstehenden Zapfen trägt. Die Mutter ist in einer stehenden Axialführung drehfest gehalten, so dass eine Rotation der Spindel eine Axialbewegung der Mutter entlang der Spindel bewirkt. Der Zapfen steht dabei mit einer Kulisse in Eingriff, die an einer Klappenwelle ausgebildet ist. Die Kulisse ist dabei schraubenförmig geformt, so dass eine Axialverstellung des Zapfens zu einer Rotation der mit der Klappenwelle verbundenen Klappe führt, wobei die Klappe koaxial zur Drehachse der Spindel schwenkt.

Aus der DE 10 2013 203 961.1 vom 08.03.2013 ist eine Klappeneinrichtung bekannt, die ein Klappengehäuse, das wenigstens einen von der Fluidströmung in einer Axialrichtung durchströmbaren Kanalabschnitt in einer Umfangsrichtung umschließt, wenigstens eine Klappe, die zum Steuern eines durchströmbaren Querschnitts des Kanalabschnitts um eine quer zur Axialrichtung verlaufende Schwenkachse im Klappengehäuse verschwenkbar angeordnet ist, eine Stelleinrichtung zum Antreiben der Klappe, die eine linear verstellbare Antriebswelle aufweist, und eine Kopplungseinrichtung umfasst, die eine drehfest mit der Klappe verbundene, koaxial zur Schwenkachse verlaufende Klappenwelle mit der koaxial zur Schwenkachse ausgerichteten Antriebswelle koppelt, derart, dass sie lineare Bewegungen der Antriebswelle in Drehbewegungen der Klappenwelle umwandelt, wobei die Kopplungseinrichtung ein Führungsgehäuse mit einer sich koaxial zur Schwenkachse schraubenförmig erstreckenden Schraubenführung aufweist, die wenigstens eine im Führungsgehäuse ausgebildete, schraubenförmige Führungsnut, die zwei einander zugewandte Führungsflächen besitzt, und wenigstens einen in die Führungsnut eingreifenden Gleitkörper aufweist, wobei entweder das Führungsgehäuse mit der Klappenwelle und der jeweilige Gleitkörper mit der Antriebswelle oder das Führungsgehäuse mit der Antriebswelle und der jeweilige Gleitkörper mit der Klappenwelle drehfest verbunden ist. Eine derartige helixartige Schraubenführung erzwingt bei einer Linearverstellung zwischen Gleitkörper und Führungsgehäuse eine Drehverstellung zwischen Gleitkörper und Führungsgehäuse und somit auch zwischen der Klappenwelle und der Antriebswelle.

Bei der bekannten Klappeneinrichtung ist der jeweilige Gleitkörper durch einen zylindrischen Bolzen gebildet, wodurch sich an der zugehörigen Führungsfläche ein linienförmiger Kontakt einstellt. Hierbei kommt es bei der Kraft- bzw. Momentübertragung zu einer hohen Flächenpressung, die eine hohe Materialbeanspruchung bewirkt und zu einem erhöhten Verschleiß innerhalb der Kopplungseinrichtung führen kann.

Aus der EP 1 098 124 A1 ist eine gattungsgemäße Kopplungseinrichtung für eine Klappeneinrichtung bekannt, die sich von der vorstehend beschriebenen Klappeneinrichtung dadurch unterscheidet, dass der jeweilige Gleitkörper komplementär zur jeweiligen Führungsnut schraubenförmig ausgerichtet ist und zwei voneinander abgewandte Gleitflächen zur flächigen Anlage an einer der Führungsflächen aufweist. Bei dieser bekannten Klappeneinrichtung ist der Gleitkörper an der Antriebswelle in Form eines Außengewindes realisiert, während die Führungsnut in der Klappenwelle als Innengewinde realisiert ist, wobei sich die Antriebswelle mit dem Außengewinde durch die ganze Klappenwelle axial hindurch erstreckt, so dass über das gesamte Innengewinde ein großflächiger Kontakt gegeben ist.

Die vorliegende Erfindung beschäftigt sich mit dem Problem, für eine Kopplungseinrichtung der eingangs genannten Art bzw. für eine damit ausgestattete Klappeneinrichtung eine verbesserte oder zumindest eine andere Ausführungsform anzugeben, die sich insbesondere durch einen reduzierten Verschleiß auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zwischen dem jeweiligen Gleitkörper und der zugehörigen Führungsnut einen flächigen Kontakt zu erzeugen, wodurch sich die Flächenpressung bei einer Kraft- bzw. Momentübertragung innerhalb der Kopplungseinrichtung erheblich reduziert. Die reduzierte Flächenpressung bewirkt eine entsprechend geringere Materialbeanspruchung, die ihrerseits zu einem signifikant reduzierten Verschleiß innerhalb der Kopplungseinrichtung führt. Eine flächige Kontaktierung zwischen Gleitkörper einerseits und Führungsnut andererseits wird erfindungsgemäß dadurch erreicht, dass der jeweilige Gleitkörper seinerseits komplementär zur jeweiligen Führungsnut schraubenförmig ausgerichtet ist und zwei voneinander abgewandte Gleitflächen aufweist, die eine flächige Kontaktierung an der jeweiligen Führungsfläche der Führungsnut ermöglichen. Durch die schraubenförmige Ausrichtung des Gleitkörpers komplementär zur jeweiligen Führungsnut erstrecken sich die Gleitflächen ebenfalls schraubenförmig, und zwar komplementär zu den schraubenförmig verlaufenden Führungsflächen. Hierdurch wird der flächige Kontakt zwischen der jeweiligen Gleitfläche und der jeweiligen Führungsfläche ermöglicht.

Der jeweilige Gleitkörper und die jeweilige Führungsnut können hinsichtlich ihrer Dimensionierung in der Umfangsrichtung bezüglich der Schwenkachse so aufeinander abgestimmt sein, dass der jeweilige Gleitkörper in der Umfangsrichtung spielfrei innerhalb der Führungsnut angeordnet ist, so dass beide Gleitflächen gleichzeitig mit je einer der beiden Führungsflächen in Kontakt stehen. Bevorzugt ist dabei eine geringe Presspassung in der Umfangsrichtung. Grundsätzlich ist jedoch auch ein kleines Spiel in der Umfangsrichtung denkbar, so dass je nach Drehrichtung entweder nur die eine Gleitfläche an der zugewandten Führungsfläche anliegt oder nur die andere Gleitfläche an der zugewandten anderen Führungsfläche anliegt.

Eine erfindungsgemäße Kopplungseinrichtung dient zum Koppeln einer ersten Welle mit einer koaxial zur ersten Welle ausgerichteten zweiten Welle, wobei diese Kopplung derart erfolgt, dass die Kopplungseinrichtung lineare Bewegungen der einen Welle in Drehbewegungen der anderen Welle umwandelt. Hierdurch ist die Kopplungseinrichtung prädestiniert für eine Verwendung in einer Klappeneinrichtung der vorstehend beschriebenen Art, wobei die eine Welle der Antriebswelle entspricht, während die andere Welle der Klappenwelle entspricht. Die Kopplungseinrichtung charakterisiert sich dabei durch ein Führungsgehäuse mit einer sich koaxial zu den Wellen schraubenförmig erstreckenden Schraubenführung, die zumindest eine im Führungsgehäuse ausgebildete, schraubenförmige Führungsnut, die zwei einander zugewandte Führungsflächen besitzt, und wenigstens einen in die Führungsnut eingreifenden Gleitkörper aufweist. Ferner ist das Führungsgehäuse mit der einen Welle drehfest verbunden, während der jeweilige Gleitkörper mit der anderen Welle drehfest verbunden ist. Auch hier lässt sich der Verschleiß der Kopplungseinrichtung dadurch reduzieren, dass der jeweilige Gleitkörper komplementär zur jeweiligen Führungsnut schraubenförmig ausgerichtet ist und zwei voneinander abgewandte Gleitflächen zur flächigen Anlage an einer der Führungsflächen aufweist.

Erfindungsgemäß ist der jeweilige Gleitkörper parallel zur Schwenkachse maximal halb so groß dimensioniert wie die jeweilige Führungsnut. Hierdurch ergibt sich für die Kopplungseinrichtung eine vereinfachte Herstellbarkeit.

Gemäß einer alternativen, nicht erfindungsgemäßen Lösung kann der jeweilige Gleitkörper parallel zur Schwenkachse mindestens gleich groß dimensioniert sein wie die jeweilige Führungsnut. In diesem Fall kann der Gleitkörper in einer ersten Endstellung oder Ausgangsstellung die jeweilige Führungsnut vollständig ausfüllen. Hierdurch wird eine minimale Flächenpressung zwischen dem jeweiligen Gleitkörper und den Führungsflächen der zugehörigen Führungsnut erzeugt.

Gemäß einer anderen vorteilhaften Ausführungsform kann die jeweilige Führungsnut axial einerseits zum axialen Einführen des jeweiligen Gleitkörpers axial offen sein, was die Montage der Kappeneinrichtung erheblich vereinfacht. Zusätzlich oder alternativ kann die jeweilige Führungsnut axial andererseits zum Ausbilden eines Axialanschlags für den jeweiligen Gleitkörper axial geschlossen sein. Durch einen derartigen Axialanschlag lässt sich die zuvor genannte erste Endstellung oder Ausgangsstellung der Kopplungseinrichtung definieren.

Gemäß einer zweckmäßigen Weiterbildung kann der jeweilige Axialanschlag komplementär zu einem in der Führungsnut vorausgehenden Ende des jeweiligen Gleitkörpers geformt sein, wodurch sich auch bei Erreichen der Ausgangsstellung eine flächige Kontaktierung zwischen Axialanschlag und Gleitkörper ergibt.

Eine erfindungsgemäße Klappeneinrichtung dient zum Steuern einer Fluidströmung einer Brennkraftmaschine und umfasst ein Klappengehäuse, das wenigstens einen von der Fluidströmung in einer Axialrichtung durchströmbaren Kanalabschnitt in einer Umfangsrichtung umschließt, wenigstens eine Klappe, die zum Steuern eines durchströmbaren Querschnitts des Kanalabschnitts um eine quer zur Axialrichtung verlaufende Schwenkachse im Klappengehäuse verschwenkbar angeordnet ist, eine Stelleinrichtung zum Antreiben der Klappe, die eine linear verstellbare Antriebswelle aufweist, und eine Kopplungseinrichtung der vorstehend beschriebenen Art, die eine drehfest mit der Klappe verbundene, koaxial zur Schwenkachse verlaufende Klappenwelle mit der koaxial zur Schwenkachse ausgerichteten Antriebswelle koppelt, derart, dass sie lineare Bewegungen der Antriebswelle in Drehbewegungen der Klappenwelle umwandelt.

Grundsätzlich kann gemäß einer vorteilhaften anderen Ausführungsform vorgesehen sein, dass zwischen der Klappe und dem Klappengehäuse ein Drehanschlag ausgebildet ist, der eine Endstellung der Klappe, also entweder deren Offenstellung oder deren Schließstellung definiert. Hierdurch kann die Funktionalität der Klappeneinrichtung verbessert werden. Besonders vorteilhaft ist eine Ausführungsform, bei welcher die Führungsnut beidseitig offen ist. Alternativ kann bei einer Ausführungsform, bei welcher die Führungsnut nur einseitig offen ist und den vorstehend genannten Axialanschlag aufweist, vorgesehen sein, dass der Drehanschlag und der Axialanschlag so aufeinander abgestimmt sind, dass zwischen dem Gleitkörper und dem Axialanschlag ein Restweg verbleibt, wenn die Klappe am Drehanschlag anschlägt. Hierdurch ist sichergestellt, dass die Klappe unabhängig von Toleranzen des Stellantriebs und der Kopplungseinrichtung sicher ihre jeweilige durch den Drehanschlag definierte Endstellung erreicht.

Bei einer anderen vorteilhaften Ausführungsform kann das Führungsgehäuse aus einem reibungsreduzierten Kunststoff hergestellt sein. Ein reibungsreduzierter Kunststoff ist beispielsweise ein mit Teflon modifizierter Kunststoff, wie z.B. PTFE (Polytetrafluorethylen). Sofern entsprechend einer bevorzugten Ausführungsform das Führungsgehäuse und die Klappenwelle als integrales Bauteil hergestellt sind, kann auch dieses Integralbauteil aus einem reibungsreduzierten Kunststoff hergestellt sein.

Bei einer anderen Ausführungsform kann der jeweilige Gleitkörper aus einem reibungsreduzierten Kunststoff hergestellt sein. Zweckmäßig kann dabei der jeweilige Gleitkörper mit der Antriebswelle als Integralbauteil ausgestaltet sein. In diesem Fall ist es zweckmäßig, das Integralbauteil aus einem reibungsreduzierten Kunststoff herzustellen.

Bei einer anderen Ausführungsform kann die Antriebswelle durch einen Wandabschnitt des Gehäuses der Stelleinrichtung hindurchgeführt sein, wobei zwischen dem Wandabschnitt der Antriebswelle eine drehmomentabstützende Linearführung ausgebildet ist. Mit Hilfe einer derartigen Drehmomentabstützung kann die Antriebswelle bei ihrer Linearbewegung auch Drehmomente übertragen bzw. aufnehmen, ohne sich dabei um ihre Längsmittelachse zu verdrehen.

Zweckmäßig kann die Linearführung zumindest eine parallel zur Schwenkachse verlaufende Längsnut aufweisen, in die ein Stützkörper eingreift. Der Stützkörper kann dabei am Gehäuse der Stelleinrichtung ortsfest angeordnet sein und insbesondere integral daran ausgeformt sein. An der Antriebswelle können zweckmäßig zwei derartige Längsnuten einander diametral gegenüberliegend angeordnet sein, um die Drehmomentabstützung zu verbessern. Zweckmäßig sind dann auch zwei einander diametral gegenüberliegende Stützkörper vorgesehen, die jeweils in eine der Längsnuten eingreifen. Der jeweilige Stützkörper und die jeweilige Längsnut arbeiten dabei nach Art einer Nut-Feder-Führung zusammen.

Entsprechend einer vorteilhaften Weiterbildung können an der Antriebswelle zwei derartige Gleitkörper einander diametral gegenüberliegend angeordnet sein, wobei sie in der Umfangsrichtung um etwa 90° zu den beiden Längsnuten versetzt angeordnet sind. Hierdurch ergibt sich eine vereinfachte Herstellbarkeit für eine kompakte Bauform der Antriebswelle mit Gleitkörpern und Längsnuten.

Sofern auch die Antriebswelle aus einem reibungsreduzierten Kunststoff hergestellt ist, lässt sich auch der Verschleiß innerhalb der Linearführung bzw. der Drehmomentabstützung reduzieren.

Bei einer anderen vorteilhaften Ausführungsform kann das Klappengehäuse wenigstens zwei derartige Kanalabschnitte umschließen, die parallel zur Schwenkachse nebeneinander angeordnet sind. Die Klappenwelle trägt dann axial hintereinander wenigsten zwei Klappen zum Steuern je eines dieser Kanalabschnitte. Beispielsweise kann die Klappeneinrichtung dadurch in einer zweiflutigen Frischluftanlage zu Einsatz kommen.

Gemäß einer vorteilhaften Weiterbildung der vorstehenden Ausführungsform kann die Klappenwelle zwischen den Klappen in einer am Klappengehäuse ausgebildeten Lagerstelle gelagert sein, wodurch die Lagerung der Klappenwelle insgesamt stabilisiert ist.

Besonders zweckmäßig ist eine Ausführungsform, bei der die Klappenwelle aus dem Klappengehäuse herausgeführt ist und außerhalb des Klappengehäuses und somit außerhalb des Kanalabschnitts über die Kopplungseinrichtung mit der Antriebswelle gekoppelt ist. Auf diese Weise befindet sich ein Eingriff zwischen dem jeweiligen Gleitkörper und der jeweiligen Führungsnut außerhalb der Fluidströmung, die im Betrieb der Klappeneinrichtung durch den vom Klappengehäuse eingefassten Kanalabschnitt strömt. Somit kann eine Verschmutzung der Kopplungseinrichtung durch die Fluidströmung im Bereich dieses Eingriffs effizient vermieden werden.

Bei einer anderen vorteilhaften Ausführungsform, die bevorzugt mit der vorstehenden Ausführungsform kombiniert ist, kann vorgesehen sein, dass das Führungsgehäuse bezüglich der Schwenkachse axial zwischen dem Klappengehäuse und einem Gehäuse der Stelleinrichtung angeordnet ist. Somit befindet sich die Kopplungseinrichtung einerseits außerhalb des Klappengehäuses und somit außerhalb des durchströmten Kanalabschnitts und andererseits auch außerhalb der Stelleinrichtung und somit auch außerhalb von gegebenenfalls vorhandenen Druckräumen und dergleichen der Stelleinrichtung, beispielsweise im Falle eines als Druckdose ausgestalteten Stellantriebs. Hierdurch vereinfacht sich der Aufbau der Klappeneinrichtung, da z.B. sowohl das Klappengehäuse als auch das Gehäuse der Stelleinrichtung auf herkömmliche Weise abgedichtet werden können.

Gemäß einer anderen Ausführungsform kann die Stelleinrichtung als hydraulisch oder pneumatisch ansteuerbare Druckdose oder als temperaturgesteuertes Wachsdehnelement ausgestaltet sein. Sowohl eine Druckdose als auch ein Wachsdehnelement arbeiten ohne elektrische Energieversorgung, was den Aufwand zur Realisierung der Klappeneinrichtung reduziert. Ebenso vereinfacht sich die Montage einer damit ausgestatteten Baugruppe an der Brennkraftmaschine, da keine elektrischen Kontakte verlegt und hergestellt werden müssen. Des Weiteren arbeiten Druckdosen sehr zuverlässig. Auch ist die Versorgung mit dem erforderlichen Steuerdruck relativ einfach realisierbar, da im Bereich einer Brennkraftmaschine unterschiedlichste hydraulische oder pneumatische Systeme zur Verfügung stehen, die zur Bereitstellung des gewünschten Steuerdrucks genutzt werden können.

Die Verwendung eines Wachsdehnelements ermöglicht eine einfache, zuverlässige Temperatursteuerung der Klappe.

Entsprechend einer vorteilhaften Ausführungsform der Klappeneinrichtung, bei welcher die Stelleinrichtung als Druckdose ausgestaltet ist, kann die Druckdose in einem Druckdosengehäuse einen Steuerraum aufweisen, der durch eine elastische Membran begrenzt ist, die fest mit der Antriebswelle verbunden ist, wobei das Druckdosengehäuse einen mit dem Steuerraum fluidisch verbundenen Steueranschluss aufweist, über den der Steuerraum zum Verstellen der Membran mit einem Überdruck oder mit einem Unterdruck beaufschlagbar ist. Hierdurch besitzt die Druckdose einen besonders einfachen, leicht herstellbaren Aufbau, der sich durch eine zuverlässige Funktionsweise auszeichnet. Je nach dem, ob zum Ansteuern der Membran ein Überdruck oder ein Unterdruck im Steuerraum erzeugt wird, handelt es sich bei der verwendeten Druckdose entweder um eine Unterdruckdose oder um eine Überdruckdose.

Gemäß einer vorteilhaften Weiterbildung kann in der Druckdose eine mit der Membran zusammenwirkende Rückstellfeder oder Vorspannfeder vorgesehen sein, mit der die Membran in eine erste Endstellung vorgespannt ist. Ohne Druckbeaufschlagung des Steuerraums nimmt die Membran dann diese erste Endstellung selbsttätig ein. Durch die Druckbeaufschlagung des Steuerraums kann die Membran aus der ersten Endstellung entgegen der Federkraft der Rückstell- oder Vorspannfeder verstellt werden, maximal bis in eine zweite Endstellung.

Bei einer anderen vorteilhaften Weiterbildung kann die Antriebswelle durch einen Wandabschnitt des Druckdosengehäuses aus dem Druckdosengehäuse herausgeführt sein, wobei zwischen der Antriebswelle und dem Wandabschnitt eine Drehmoment abstützende Linearführung ausgebildet ist. Mit anderen Worten, zwischen der mit der Membran verbundenen Antriebswelle und dem Druckdosengehäuse erfolgt eine Drehmomentabstützung mittels einer Linearführung.

Hierdurch wird erreicht, dass die Antriebswelle, die durch die Hubbewegungen der Membran linear angetrieben ist, keine Rotationsbewegung um ihre Längsmittelachse durchführen kann, die sich koaxial zur Schwenkachse der Klappe erstreckt. Drehmomente, welche die Antriebswelle drehend antreiben, entstehen in der Antriebswelle als Reaktion zu den Drehmomenten, die innerhalb der Kopplungseinrichtung beim Umwandeln der linearen Bewegung der Antriebswelle in eine Drehbewegung der Klappenwelle quasi als Aktion entstehen. Durch die Drehmomentabstützung der Antriebswelle am Druckdosengehäuse ist die Membran völlig von Drehmomenten entlastet, so dass in der Druckdose eine herkömmliche Membran mit herkömmlicher Anbindung zur Antriebswelle verwendet werden kann.

Die Linearführung kann beispielsweise mit wenigstens einer Nut-Feder-Führung realisiert sein. Eine derartige Nut-Feder-Führung lässt sich dabei einfach oder zweifach oder mehrfach realisieren, um das Drehmoment der Antriebswelle in der Umfangsrichtung an einer Stelle oder an zwei Stellen oder an mehreren Stellen am Druckdosengehäuse abzustützen. Dabei kann die jeweilige Nut in der Antriebswelle ausgebildet sein, so dass die darin eingreifende Feder dann am Druckdosengehäuse angeordnet ist. Ebenso ist es möglich, die Feder an der Antriebswelle auszubilden und die zugehörige Nut am Druckdosengehäuse vorzusehen. Letztere Variante scheint im Hinblick auf die Möglichkeit, größere Drehmomente abzustützen, vorteilhaft zu sein. Die Drehmoment abstützende Kontur des Druckdosengehäuses, also insbesondere die jeweilige Nut oder die jeweilige Feder, kann dabei vorzugsweise unmittelbar an einem Öffnungsrand ausgeformt sein, der eine Durchgangsöffnung in der Umfangsrichtung einfasst, durch welche die Antriebswelle aus dem Druckdosengehäuse herausgeführt ist.

Andere Linearführungen, die eine Drehmomentabstützung bewirken, lassen sich beispielsweise mittels einer im Querschnitt mehrkantigen Außenkontur der Antriebswelle realisieren, die mit einer dazu komplementären, mehrkantigen Innenkontur an vorstehend genanntem Öffnungsrand zusammenwirkt.

Bei einer anderen vorteilhaften Weiterbildung kann das Druckdosengehäuse einen Grundkörper und einen Deckel aufweisen, der eine der Klappe zugewandte Montageöffnung des Grundkörpers verschließt. Hierdurch ergibt sich ein einfacher Aufbau für die Druckdose, was deren Herstellung preiswert macht. Vorzugsweise enthält der Grundkörper den Steuerraum. Ferner weist der Grundkörper bevorzugt den Steueranschluss auf. Die Membran ist zweckmäßig zwischen dem Grundkörper und dem Deckel geklemmt, so dass die Membran durch das Anbringen des Deckels am Grundkörper fixiert wird. Der Deckel weist dagegen den Wandabschnitt des Druckdosengehäuses auf, der die von der Antriebswelle durchsetzte Durchgangsöffnung enthält. Zweckmäßig können der Grundkörper und der Deckel miteinander verclipst sein. Wodurch beispielsweise eine werkzeugfreie Montage ermöglicht wird.

Gemäß einer besonders vorteilhaften Weiterbildung kann der Deckel integral am Klappengehäuse ausgeformt sein. Auf diese Weise wird die Druckdose durch das Anbringen des Grundkörpers mit eingesetzter Membran am Deckel bzw. am Klappengehäuse vervollständigt. Insgesamt lässt sich dadurch die Klappeneinrichtung besonders einfach realisieren. Beispielsweise können zusätzliche Befestigungsmaßnahmen und Befestigungselemente entfallen, mit denen die Druckdose am Klappengehäuse befestigt werden muss.

Gemäß einer anderen Ausführungsform, die für sich oder bevorzugt in Kombination mit der vorstehenden Ausführungsform realisierbar ist, kann ein Gehäuse der Stelleinrichtung über eine Verbindung mit dem Klappengehäuse verbunden sein und mittels dieser Verbindung beabstandet vom Kanalabschnitt angeordnet sein. Optional kann vorgesehen sein, dass dieses Gehäuse wieder einen Grundkörper und einen Deckel aufweist. Ferner kann optional vorgesehen sein, dass dieser Deckel wieder integral am Klappengehäuse ausgeformt ist. Die vorstehend genannte Verbindung kann beispielsweise durch zwei einander diametral gegenüberliegende Stege oder durch drei oder mehr Stege gebildet sein, die sich jeweils vom Klappengehäuse bis zum Gehäuse der Stelleinrichtung erstrecken. Ebenso ist es möglich, diese Verbindung durch einen Hohlkörper mit geschlossen umlaufender Wand zu bilden. Beispielsweise kann dieser Hohlkörper zylindrisch sein. Zwischen den Stegen bzw. im Inneren des Hohlkörpers kann dann die Kopplungseinrichtung bzw. deren Führungsgehäuse angeordnet sein. Im Inneren des Hohlkörpers ergibt sich ein effizienter Schutz vor Verunreinigungen. Dieser Hohlkörper kann beispielsweise konzentrisch zur Schwenkachse angeordnet und einerseits mit dem Gehäuse der Stelleinrichtung und andererseits mit dem Klappengehäuse verbunden bzw. damit integral hergestellt sein. Das Innere des Hohlkörpers kann zur Montage der Kopplungseinrichtung z.B. durch das geöffnete Gehäuse der Stelleinrichtung hindurch zugänglich sein.

Bei einer anderen vorteilhaften Ausführungsform kann die Schraubenführung radial offen sein, wodurch sie besonders einfach herstellbar ist. Die Schraubenführung kann grundsätzlich so ausgestaltet sein, dass der Gleitkörper radial nach außen oder radial nach innen in die jeweilige Führungsnut eingreift.

Die Kopplungseinrichtung kann dabei entweder nur eine einzige helixartige Führungsnut, in die dann bevorzugt nur ein einziger Gleitkörper eingreift, oder mehrere koaxial zueinander angeordnete, axial ineinandergreifende helixartige Führungsnuten aufweisen, in die bevorzugt jeweils nur ein einziger Gleitkörper eingreift. Bevorzugt ist dabei eine Konfiguration, bei welcher genau zwei helixartige Führungsnuten vorgesehen sind, die in der Umfangsrichtung um 180° zueinander versetzt angeordnet sind und in die bevorzugt jeweils nur ein einziger Gleitkörper eingreift. Demnach sind die beiden Führungsnuten quasi nach Art einer Doppelhelix angeordnet. Hierdurch ergibt sich eine in der Umfangsrichtung verteilte, vorzugsweise symmetrische Drehmomentabstützung innerhalb der Kopplungseinrichtung zwischen den beiden Gleitkörpern und den zugehörigen Führungsnuten.

Bei einer anderen vorteilhaften Weiterbildung kann der jeweilige Gleitkörper drehfest mit der Antriebswelle verbunden sein und radial nach außen in die jeweilige Führungsnut eingreifen, die drehfest mit der Klappenwelle verbunden ist. Eine derartige Bauform ist besonders einfach realisierbar.

Der jeweilige Gleitkörper kann in Form eines separaten Bauteils an die Antriebswelle angebaut sein. Alternativ kann der jeweilige Gleitkörper auch integral an der Antriebswelle ausgeformt sein. Beispielsweise handelt es sich bei der Antriebswelle um ein Spritzformteil aus Kunststoff.

Bei einer Weiterbildung kann das Führungsgehäuse abgesehen von der Einführöffnung nach außen geschlossen ausgestaltet sein. Die Einführöffnung kann optional mit einer Kappe verschlossen sein, die eine Durchgangsöffnung enthält, durch welche die Antriebswelle hindurchgeführt ist. Somit lässt sich ein Innenraum des Führungsgehäuses nach außen hermetisch verschließen, beispielsweise um eine Verschmutzung der Schraubenführung zu verhindern.

Gemäß einer zweckmäßigen Weiterbildung kann die Kappe im Bereich der Durchgangsöffnung eine Radialdichtung aufweisen, die außen an der Antriebswelle anliegt. Hierdurch kann die Abdichtung des Innenraums des Führungsgehäuses zusätzlich verbessert werden. Die Antriebswelle kann gemäß einer bevorzugten Bauform zumindest in einem Längsabschnitt, der sich im Betrieb der Klappeneinrichtung, also bei der Linearverstellung der Antriebswelle, innerhalb der Durchgangsöffnung relativ zum Führungsgehäuse bewegt, mit einem kreiszylindrischen Querschnitt ausgestattet sein. Hierdurch lässt sich die Abdichtung der Durchgangsöffnung mit Hilfe einer Radialdichtung signifikant verbessern.

Bei einer anderen vorteilhaften Ausführungsform kann der durchströmbare Querschnitt des Kanalabschnitts in einer parallel zur Schwenkachse verlaufenden Breitenrichtung mindestens zweimal oder mindestens dreimal, vorzugsweise vier- oder fünfmal, größer sein als in einer quer dazu verlaufenden Höhenrichtung. Der durchströmbare Querschnitt des Kanalabschnitts wird dadurch flach, wodurch sich für die Klappeneinrichtung eine kompakte Bauform realisieren lässt.

Zusätzlich oder alternativ kann vorgesehen sein, dass sich der durchströmbare Querschnitt des Kanalabschnitts in einer parallel zur Schwenkachse verlaufenden Breitenrichtung mit zunehmendem Abstand von der Stelleinrichtung verjüngt. Hierdurch wird für den Kanalabschnitt eine spezielle Geometrie geschaffen, die für bestimmte Anwendungsformen vorteilhaft sein kann. Die Verjüngung des durchströmbaren Querschnitts erfolgt zweckmäßig kontinuierlich.

Die Klappe ist zweckmäßig komplementär zum durchströmbaren Querschnitt geformt, um den Querschnitt in einer Schließstellung möglichst weitgehend verschließen zu können.

Gemäß einer vorteilhaften Ausführungsform erstreckt sich die Schwenkachse im Wesentlichen mittig zum durchströmbaren Querschnitt, wobei sich die Klappe dann beiderseits der Schwenkachse erstreckt, wodurch die Klappe quasi als Schmetterlingsklappe konfiguriert ist.

Bei einer anderen Ausführungsform kann die Klappenwelle proximal zur Stelleinrichtung und distal zur Stelleinrichtung jeweils einen Lagerabschnitt aufweisen, der in einem Lagerbereich des Gehäuses bzw. des Kanalabschnitts parallel zur Axialrichtung eingesetzt ist. Auch diese Maßnahme führt zu einer vereinfachten Herstellung der Klappeneinrichtung.

Die Klappe ist vorzugsweise integral an der Klappenwelle ausgeformt, wodurch auch hier eine einfache Realisierbarkeit erzielt werden kann.

Eine bevorzugte Anwendung der Klappeneinrichtung wird in einer Frischluftanlage gesehen, beispielsweise als Drosselklappeneinrichtung. Eine derartige frischluftseitige Anordnung der Klappeneinrichtung hat den Vorteil, dass viele Komponenten aus einem Kunststoff hergestellt werden können. Beispielsweise können das Klappengehäuse, die Klappe und das Druckdosengehäuse aus Kunststoff hergestellt werden. Zusätzlich können auch die Klappenwelle und die Antriebswelle aus Kunststoff hergestellt werden. Schließlich lässt sich außerdem die Kopplungseinrichtung aus Kunststoff preiswert herstellen.

Gemäß einer vorteilhaften Ausführungsform kann die Kopplungseinrichtung außerhalb eines Gehäuses der Stelleinrichtung angeordnet sein. Hierdurch ist es möglich, quasi beliebige bekannte Stelleinrichtungen zu verwenden, so dass auf preiswerte, in der praxis bewährte Ausführungsformen von Stelleinrichtungen zurückgegriffen werden kann. Hierdurch gestaltet sich die Klappeneinrichtung vergleichsweise preiswert.

Besonders vorteilhaft ist eine Ausführungsform, bei der die Kopplungseinrichtung axial zwischen einem Gehäuse der Stelleinrichtung und dem Klappengehäuse angeordnet ist. Hierdurch ergibt sich eine sehr schlanke und einfach montierbare Bauform.

Das Gehäuse der Kopplungseinrichtung, also das Führungsgehäuse ist insbesondere zusätzlich und separat zum Klappengehäuse und/oder zu einem Gehäuse der Stelleinrichtung vorgesehen.

Die Merkmale der vorstehend erläuterten Ausführungsformen der Klappeneinrichtung sind auch bei der Kopplungseinrichtung optional realisierbar, sofern sich diese Merkmale auf die Kopplungseinrichtung beziehen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht einer Klappeneinrichtung,
- Fig. 2: eine Seitenansicht der Klappeneinrichtung, jedoch bei einer anderen Ausführungsform,
- Fig. 3: eine isometrische Ansicht einer Stelleinrichtung,
- Fig. 4: eine isometrische Ansicht der Stelleinrichtung, jedoch bei einer anderen Ausführungsform,
- Fig. 5: eine isometrische Ansicht einer Kopplungseinrichtung im Bereich einer Antriebswelle der Stelleinrichtung,
- Fig. 6: eine isometrische Ansicht der Kopplungseinrichtung im Bereich einer Klappenwelle,
- Fig. 7: isometrische Ansichten der Klappeneinrichtung mit Stelleinrichtung im Bereich der Kopplungseinrichtung bei verschiedenen Betriebszuständen a, b und c,
- Fig. 8: isometrische Ansichten a, b und c wie in Fig. 7, jedoch bei einer anderen, nicht erfindungsgemäßen Ausführungsform der Kopplungseinrichtung.

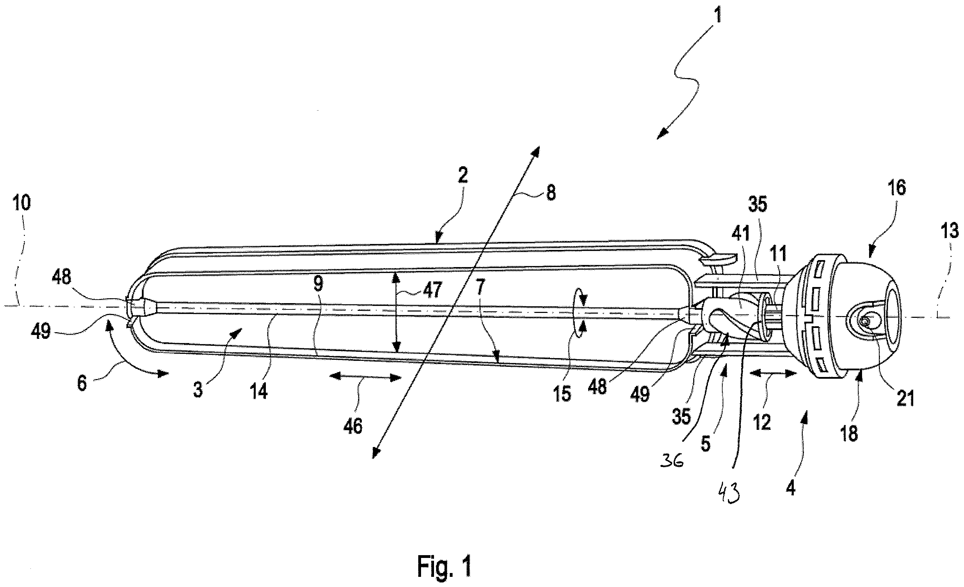

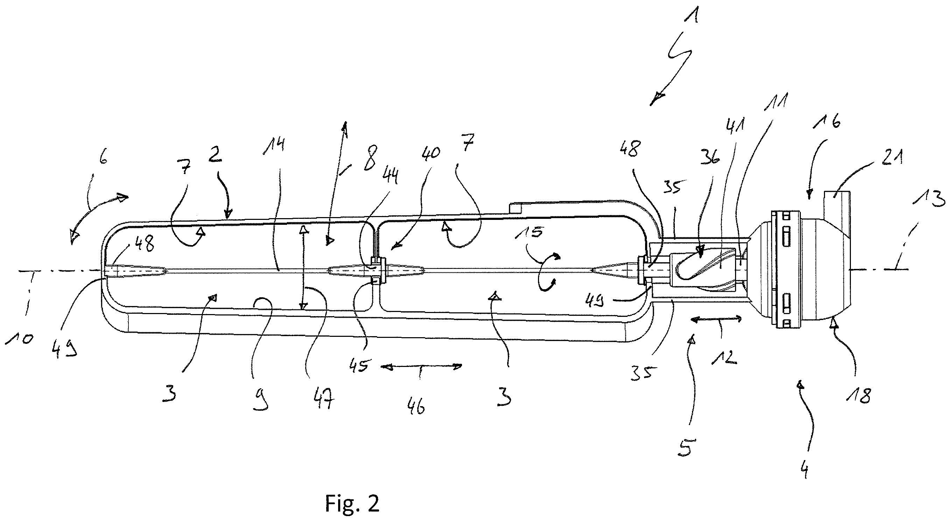

Entsprechend den Fig. 1 und 2 umfasst eine Klappeneinrichtung 1, mit deren Hilfe eine Fluidströmung einer Brennkraftmaschine gesteuert werden kann, ein Klappengehäuse 2, zumindest eine Klappe 3, eine Stelleinrichtung 4 und eine Kopplungseinrichtung 5. Das Klappengehäuse 2 umschließt in einer Umfangsrichtung 6 zumindest einen Kanalabschnitt 7, der von der jeweiligen Fluidströmung in einer Axialrichtung 8 durchströmbar ist. Zweckmäßig strömt dabei die gesamte Fluidströmung durch den Kanalabschnitt 7. Die Klappe 3 ist zum Steuern eines durchströmbaren Querschnitts 9 des Kanalabschnitts 7 um eine Schwenkachse 10 im Klappengehäuse 2 verschwenkbar angeordnet. Die Schwenkachse 10 erstreckt sich dabei quer, also senkrecht zur Axialrichtung 8. Die Stelleinrichtung 4 dient zum Antreiben der Klappe 3 und weist eine linear verstellbare Antriebswelle 11 auf. Eine lineare Bewegungsrichtung 12 der Antriebswelle 11 verläuft dabei parallel zu einer Längsmittelachse 13 der Antriebswelle 11, die koaxial zur Schwenkachse 10 verläuft, also mit dieser zusammenfällt.

Die Kopplungseinrichtung 5 weist eine drehfest mit der Klappe 3 verbundene Klappenwelle 14 auf, die sich koaxial zur Schwenkachse 10 erstreckt. Die Kopplungseinrichtung 5 koppelt die Klappenwelle 14 mit der Antriebswelle 11. Klappenwelle 14 und Antriebswelle 11 sind dabei koaxial zueinander bzw. koaxial zur Schwenkachse 10 ausgerichtet. Die Kopplung zwischen der Klappenwelle 14 und der Antriebswelle 11 mit Hilfe der Kopplungseinrichtung 5 erfolgt dabei so, dass die Kopplungseinrichtung 5 die linearen Bewegungen 12 der Antriebswelle 11 in Drehbewegungen 15 der Klappenwelle 14 umwandelt.

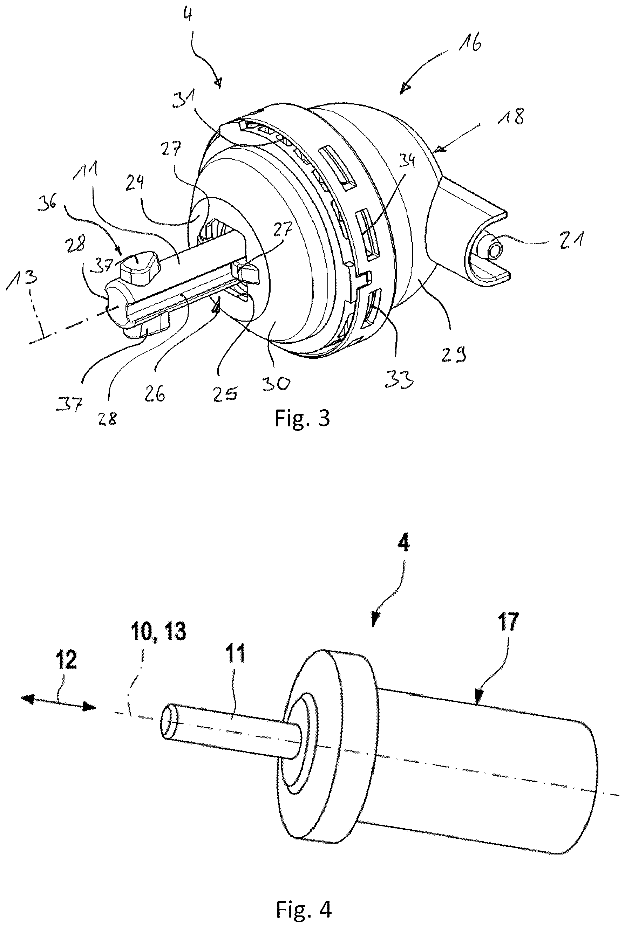

Bei den Ausführungsformen der Figuren 1 bis 3, 7 und 8 ist die Stelleinrichtung 4 als Druckdose 16 ausgestaltet, die hydraulisch oder pneumatisch angesteuert werden kann. Im Unterschied dazu zeigt Fig. 4 eine Ausführungsform, bei welcher die Stelleinrichtung 4 als temperaturgesteuertes Wachsdehnelement 17 ausgestaltet ist. Die nachfolgende Beschreibung bezieht sich explizit nur auf die Variante mit der Druckdose 16 als Stelleinrichtung 4. Es ist jedoch klar, dass alle Merkmale ohne direkten Bezug zur Druckdose 16 auch bei der Variante mit dem Wachsdehnelement 17 als Stelleinrichtung 4 realisierbar sind und dass auch Merkmale mit direktem Bezug zur Druckdose 16 grundsätzlich auch beim Wachsdehnelement 17 realisierbar sind. Insgesamt ist die nachfolgende Beschreibung auch implizit auf die Variante mit dem Wachsdehnelement 17 als Stelleinrichtung 4 bezogen.

Entsprechend den Figuren 1 bis 3, 7 und 8 umfasst die Druckdose 16 ein Druckdosengehäuse 18, das einen Steuerraum enthält. Dieser ist im Druckdosengehäuse 18 durch eine hier nicht sichtbare elastische Membran begrenzt, die mit der Antriebswelle 11 fest verbunden ist. Das Druckdosengehäuse 18 weist außerdem einen Steueranschluss 21 auf, der mit dem Steuerraum fluidisch verbunden ist. Über den Steueranschluss 21 kann der Steuerraum mit einem Überdruck oder mit einem Unterdruck beaufschlagt werden, was zu einem entsprechenden Hub der Membran führt. Dieser der Hub der Membran kann dabei so orientiert sein, dass sich die Membran dabei in den Steuerraum hinein bewegt, also das Volumen des Steuerraums reduziert. Dementsprechend wird der Steuerraum zum Verstellen der Membran mit einem Unterdruck beaufschlagt. Dementsprechend handelt es sich bei der hier gezeigten, bevorzugten Ausführungsform um eine Unterdruckdose 16. Im Steuerraum ist zweckmäßig außerdem eine hier nicht erkennbare Rückstellfeder angeordnet, welche die Membran aus dem Steuerraum, also entgegen dem Hub, antreibt.

Gemäß Fig. 3 ist die Antriebswelle 11 durch einen Wandabschnitt 24 des Druckdosengehäuses 18 aus dem Druckdosengehäuse 18 herausgeführt. Hierzu enthält der Wandabschnitt 24 eine Durchgangsöffnung 25, die von der Antriebswelle 11 durchsetzt ist. Zwischen der Antriebswelle 11 und dem Wandabschnitt 24 ist eine Linearführung 26 ausgebildet, die ein Drehmoment zwischen Antriebswelle 11 und Druckdosengehäuse 18 abstützt. Bei den hier gezeigten Beispielen ist die Linearführung 26 als doppelte bzw. zweifache Nut-Feder-Führung konzipiert, bei der jeweils eine Feder 27 in eine Nut 28 eingreift. Bei der in Fig. 3 gezeigten Ausführungsform sind die beiden Federn 27 am Wandabschnitt 24 bzw. an einem die Durchgangsöffnung 25 einfassenden Öffnungsrand ausgebildet, während die beiden Nuten 28 an der Antriebswelle 11 ausgebildet sind und sich parallel zur Längsmittelachse 13 der Antriebswelle 11 erstrecken. Grundsätzlich ist jedoch auch eine Ausführungsform denkbar, bei welcher die beiden Federn 27 an der Antriebswelle 11 ausgeformt sind, wobei sie sich parallel zur Längsmittelachse 13 der Antriebswelle 11 erstrecken. Die zugehörigen Nuten 28 sind dann am Wandabschnitt 24 bzw. am Öffnungsrand der Durchgangsöffnung 25 ausgebildet.

Bei den hier gezeigten Ausführungsformen besitzt das Druckdosengehäuse 18 einen Grundkörper 29 und einen Deckel 30, der eine Montageöffnung 31 des Grundkörpers 29 verschließt, wobei diese Montageöffnung 31 der Klappe 3 zugewandt ist. Zweckmäßig enthält der Grundkörper 29 den Steuerraum und die Rückstellfeder. Die Membran bildet bezüglich des Grundkörpers 29 und des Deckels 30 ein separates Bauteil und ist zwischen dem Grundkörper 29 und dem Deckel 30 eingeklemmt. Zweckmäßig wird die Membran an einem Halterand zwischen entsprechenden Ringstufen des Grundkörpers 29 und des Deckels 30 axial, also parallel zur Längsmittelachse 13 der Antriebswelle 11 geklemmt bzw. verspannt. Dabei erfolgt die Fixierung der Membran am Grundkörper 29 durch die Fixierung des Deckels 30 am Grundkörper 29. Beispielsweise kann hierzu der Grundkörper 29 mit dem Deckel 30 verrastet oder verclipst sein. Entsprechende Rastnasen 33 des Deckels 30 greifen hierzu in dazu komplementäre Rastöffnungen 34 des Grundkörpers 29 ein. Der Deckel 30 weist den Wandabschnitt 24 und die Durchgangsöffnung 25 auf. Gemäß den bevorzugten Ausführungsformen der Figuren 1, 2 und 7 ist der Deckel 30 integral am Klappengehäuse 2 ausgeformt. Beispielsweise kann der Deckel 30 hierzu mit Hilfe von wenigstens zwei parallel zur Schwenkachse 10 verlaufenden Stegen 35 mit dem Klappengehäuse 2 bzw. mit dem Kanalabschnitt 7 verbunden sein. Im Beispiel sind genau zwei sich diametral gegenüberliegende Stege 35 vorgesehen. Anstelle von zwei oder mehr Stegen 35 kann auch eine geschlossen umlaufende Wand vorgesehen sein, die einerseits mit dem Deckel 30 und andererseits mit dem Klappengehäuse 2 verbunden ist. Diese Wand definiert dabei einen, vorzugsweise zylindrischen, Hohlkörper, in dessen Innenraum die Kopplungseinrichtung 5 vor Verunreinigungen geschützt untergebracht ist.

Gemäß den Figuren 1 bis 3 und 5 bis 8 umfasst die Kopplungseinrichtung 5 ein Führungsgehäuse 41, das eine Schraubenführung 36 aufweist, die sich koaxial zur Schwenkachse 10 schraubenförmig, also helixartig erstreckt. Schraubenführung 36 weist wenigstens eine im Führungsgehäuse 41 ausgebildete, schraubenförmige Führungsnut 19 auf, die zwei einander zugewandte Führungsflächen 20 besitzt. Die Schraubenführung 36 weist außerdem für jede Führungsnut 19 wenigstens einen Gleitkörper 37 auf, der in die jeweilige Führungsnut 19 eingreift.

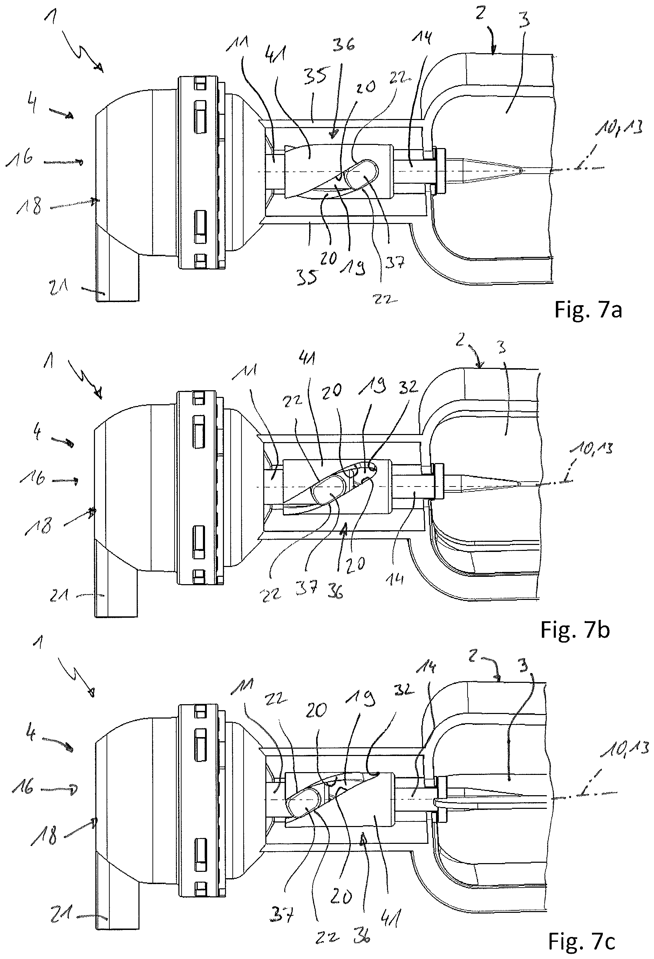

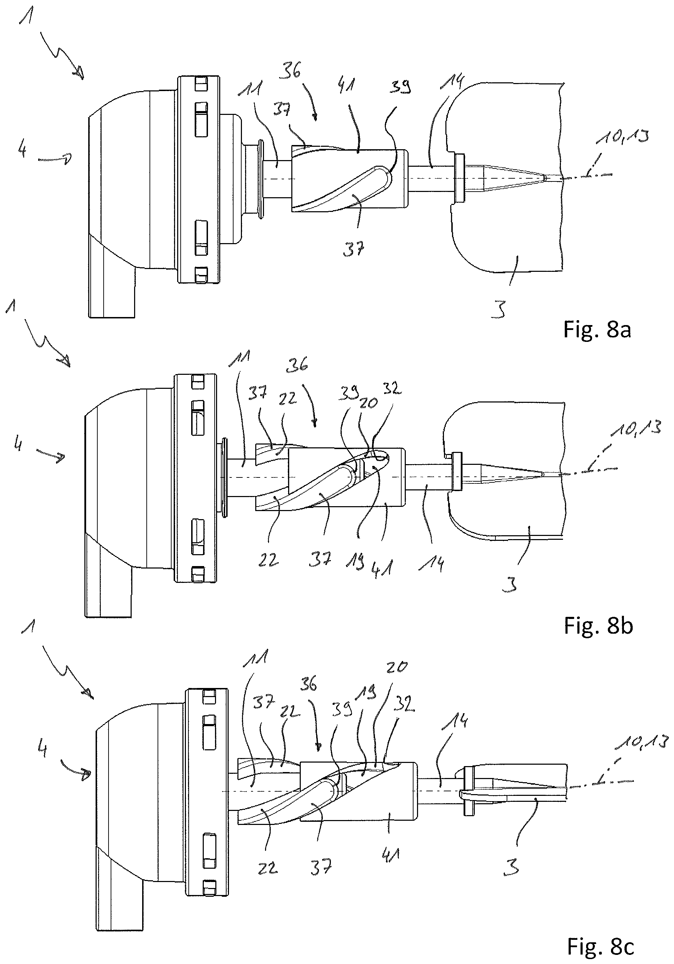

Bei den hier gezeigten Ausführungsformen weist die Schraubenführung 36 zwei geschraubte Führungsnuten 19 auf, die in der Umfangsrichtung 38 der Antriebswelle 11 um 180° zueinander versetzt angeordnet sind. Die jeweilige Führungsnut 19 erstreckt sich dabei koaxial zur Schwenkachse 10 schraubenförmig und ist dabei bezüglich der Schwenkachse 10 radial offen. Die Figuren 1, 2 und 6 zeigen dabei eine Variante, bei welcher die jeweilige Führungsnut 19 nur radial innen offen ist, während sie radial außen geschlossen ist. Also zeigen diese Ausführungsformen zwei nur einseitig radial offene Führungsnuten 19. Im Unterschied dazu zeigen die Figuren 7a bis 7c und 8a bis 8c jeweils eine Ausführungsform, bei welcher die jeweilige Führungsnut 19 radial nach innen und radial nach außen offen ist, also radial durchgängig konzipiert ist. Die jeweilige Schraubenführung 36 bzw. die jeweilige Führungsnut 19 erstreckt sich helixartig. Die beiden Führungsnuten 19 erstrecken sich relativ zueinander nach Art einer Doppelhelix.

Bei den hier gezeigten Ausführungsformen ist der jeweilige Gleitkörper 37 drehfest mit der Antriebswelle 11 verbunden, wobei er von der Antriebswelle 11 radial nach außen absteht. Die jeweilige Führungsnut 19 ist drehfest mit der Klappenwelle 14 verbunden und ist bezüglich der Antriebswelle 11 radial außen angeordnet. Dementsprechend greift der jeweilige Gleitkörper 37 radial nach außen in die jeweilige Führungsnut 19 ein. Bei den hier gezeigten Ausführungsformen sind die beiden Gleitkörper 37 bezüglich der Längsmittelachse 13 der Antriebswelle 11 diametral gegenüberliegend angeordnet. Die beiden Gleitkörper 37 sind dabei bevorzugt gemeinsam mit der Antriebswelle 11 aus einem Stück hergestellt, z.B. mittels Spritzformtechnik, vorzugsweise aus einem Kunststoff.

Das Führungsgehäuse 41 der Kopplungseinrichtung 5, das die Führungsnuten 19 der Schraubenführung 36 aufweist, ist drehfest mit der Klappenwelle 14 verbunden. Das Führungsgehäuse 41 weist an einer der Stelleinrichtung 4 zugewandten Seite eine Einführöffnung 42 auf, durch welche die Antriebswelle 11 mit den Gleitkörpern 37 in das Führungsgehäuse 41 eingeführt ist, derart, dass im Inneren des Führungsgehäuses 41 der jeweilige Gleitkörper 37 radial in die zugehörige Führungsnut 19 eingreift.

Bei den in den Fig. 7a bis 7c und 8a bis 8c gezeigten Ausführungsformen ist das Führungsgehäuse 41 durch die radial durchgängig konzipierten Führungsnuten 19 radial offen. Im Unterschied dazu ist das Führungsgehäuse 41 bei den Ausführungsformen der Figuren 1, 2 und 6 abgesehen von der Einführöffnung 42 nach außen verschlossen. Zum Verschließen der Einführöffnung 42 kann außerdem eine in Fig. 1 angedeutete Kappe 43 vorgesehen sein, die eine nicht näher bezeichnete Durchgangsöffnung enthält, durch welche die Antriebswelle 11 hindurchgeführt ist. Im Bereich dieser Durchgangsöffnung kann die Kappe 43 eine Radialdichtung enthalten, die an der Außenkontur der Antriebswelle 11 anliegt. Die Außenkontur der Antriebswelle 11 ist in einem Axialabschnitt der Antriebswelle 11, der im Rahmen der Linearverstellungen 12 der Antriebswelle 11 relativ zur Kappe 43 bewegt wird, zylindrisch, vorzugsweise kreis-zylindrisch konzipiert, wodurch sich die Abdichtung vereinfacht.

Die Funktion der Kopplungseinrichtung 5 wird mit Bezug auf die Figuren 7a bis 7c und 8a bis 8c näher erläutert. In den Fig. 7a und 8a befindet sich die Druckdose 18 in einer Ausgangsstellung. In dieser Ausgangsstellung drückt die Rückstellfeder die Membran in den Deckel 30 hinein in eine erste Endstellung. Durch Anlegen eines Unterdrucks über den Steueranschluss 21 an den Steuerraum kann die Membran in Richtung Grundkörper 29 bewegt werden, wodurch sie einen Hub parallel zur Längsmittelachse 13 der Antriebswelle 11 durchführt. Hierbei nimmt die Membran die Antriebswelle 11 mit, wodurch die Antriebswelle 11 ihre lineare Bewegung 12 durchführt.

In den Fig. 7b und 8b ist eine Zwischenstellung der Druckdose 16 wiedergegeben, in der die Antriebswelle 11 etwa einen halben Hub durchgeführt hat. Da die Antriebswelle 11 über die Linearführung 26 drehfest am Druckdosengehäuse 18 abgestützt ist, erzwingen die in die schraubenförmigen Führungsnuten 19 eingreifenden Gleitkörper 37 eine Rotation des Führungsgehäuses 41. Da das Führungsgehäuse 41 drehfest mit der Klappenwelle 14 und diese drehfest mit der Klappe 3 verbunden ist, ergibt sich eine entsprechende Drehverstellung der Klappe 3 um die Schwenkachse 10.

In den Fig. 7c und 8c ist die Membran maximal in den Grundkörper 29 hinein verstellt, so dass sie ihre zweite Endstellung erreicht. Auch die Antriebswelle 11 hat nun ihren maximalen Stellweg erreicht. Somit ist auch die Klappe 3 in diesem Endzustand maximal verstellt.

Im Ausgangszustand gemäß den Fig. 7a und 8a ist die Klappe 3 in einer Schließstellung, in der sie den durchströmbaren Querschnitt 9 des Kanalabschnitts 7 versperrt. In der Endstellung gemäß den Fig. 7c und 8c ist die Klappe 3 gegenüber der Ausgangsstellung um 90° verschwenkt, so dass sie den durchströmbaren Querschnitt 9 frei gibt. In der Zwischenstellung gemäß den Fig. 7b und 8b ist die Klappe 3 beispielsweise um etwa 45° gegenüber der Ausgangsstellung verschwenkt. Um eine derartige 90°-Verschwenkung der Klappe 3 zu erzielen, erstreckt sich die jeweilige Schraubenführung 36 bzw. die jeweilige Führungsnut 19 in der Umfangsrichtung über etwa 90°, wodurch bei maximalem Hub der Antriebswelle 11 bzw. der Membran eine Vierteldrehung der Klappe 3 erreicht wird.

Wie sich insbesondere den Fig. 1 und 2 entnehmen lässt, ist der durchströmbare Querschnitt 9 des Kanalabschnitts 7 gemäß einer bevorzugten Ausführungsform in einer parallel zur Schwenkachse 10 verlaufenden Breitenrichtung 46 größer dimensioniert als in einer quer dazu verlaufenden Höhenrichtung 47. Im Beispiel der Fig. 1 und 2 ist der durchströmbare Querschnitt 9 etwa fünf- bis sechsmal breiter als hoch. Des Weiteren ist hier vorgesehen, dass sich der durchströmbare Querschnitt 9 in der Breitenrichtung 46 mit zunehmendem Abstand von der Stelleinrichtung 4 verjüngt. Die Verjüngung ist hier kontinuierlich konzipiert. Beispielsweise nimmt die Höhe des durchströmbaren Querschnitts 9 über die gesamte Breite um etwa 25% ab.

Gemäß der in Figuren 3, 5, 7 und 8 ist der jeweilige Gleitkörper 37 an die schraubenförmige Geometrie der zugehörigen Führungsnut 19 angepasst, derart, dass er seinerseits bezüglich der Längsmittelachse 13 der der Antriebswelle 11 schraubenförmig ausgerichtet ist, und zwar komplementär zur Schraubenkontur der jeweiligen Führungsnut 19. Des Weiteren besitzt der jeweilige Gleitkörper 37 zwei voneinander abgewandte Gleitflächen 22, die gemäß dem Gleitkörper 37 ebenfalls schraubenförmig ausgerichtet sind bzw. sich schraubenförmig erstrecken. Dabei sind die Gleitflächen 22 der Gleitkörper 37 und Führungsflächen 20 der Führungsnut 19 so aufeinander abgestimmt, dass sich im zusammengebauten Zustand eine flächige Kontaktierung der jeweiligen Gleitfläche 22 mit der zugehörigen Führungsfläche 20 ergibt. Grundsätzlich kann dabei in der Umfangsrichtung 38 der Klappenwelle 14 bzw. in der Umfangsrichtung 23 der Antriebswelle 11 ein kleines Spiel von weniger als 1° vorgesehen sein, so dass je nach Drehrichtung der Klappenwelle 14 am jeweiligen Gleitkörper 37 entweder nur die eine Gleitfläche 22 an der zugehörigen Führungsfläche 20 anliegt oder bei entgegengesetzter Drehrichtung nur die andere Gleitfläche 22 an der zugehörigen Führungsfläche 20 anliegt. Grundsätzlich kann jedoch auch in der jeweiligen Umfangsrichtung 23 bzw. 38 eine spielfreie Positionierung des jeweiligen Gleitkörpers 37 innerhalb der zugehörigen Führungsnut 19 realisiert sein. Denkbar ist beispielsweise das Vorsehen einer relativ kleinen Presspassung.

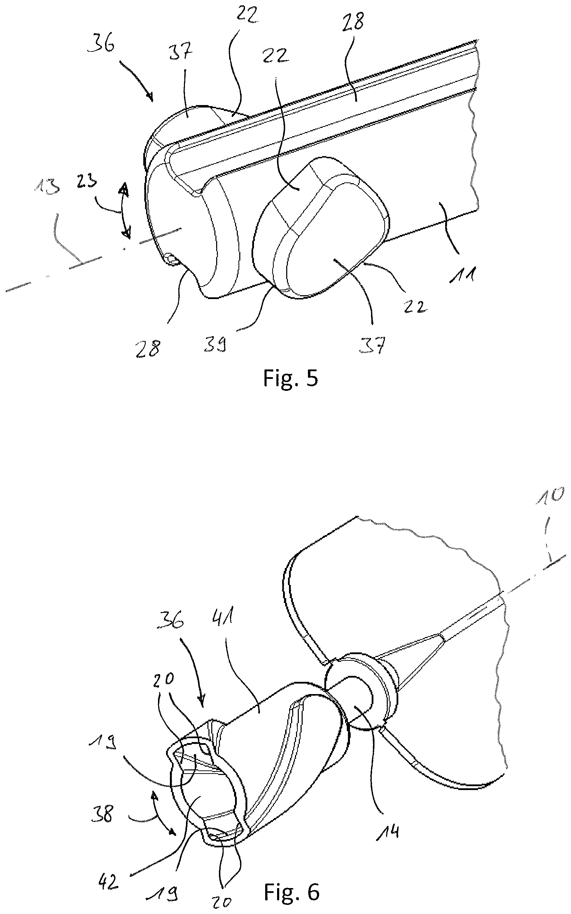

Bei der in den Figuren 5 und 7 gezeigten Ausführungsform ist der jeweilige Gleitkörper 37 in der Axialrichtung, also parallel zur Schwenkachse 10, so dimensioniert, dass er kürzer bzw. kleiner ist als die zugehörige Führungsnut 19. Beispielsweise beträgt die axiale Erstreckung des jeweiligen Gleitkörpers 37 etwa ein Drittel der axialen Erstreckung der zugehörigen Führungsnut 19.

Im Unterschied dazu zeigt die Figur 8 eine Ausführungsform, bei welcher der jeweilige Gleitkörper 37 in der Axialrichtung, also parallel zur Schwenkachse 10 etwa gleich groß wie die zugehörige Führungsnut 19. Dies hat zur Folge, dass in dem in Figur 8a gezeigten Ausgangszustand die jeweilige Führungsnut 19 vom zugehörigen Gleitkörper 37 vollständig ausgefüllt ist.

Bei den hier gezeigten Ausführungsformen ist die jeweilige Führungsnut 19 axial einenends axial offen, so dass der jeweilige Gleitkörper 37 axial in die zugehörige Führungsnut 19 einführbar ist. Ferner ist die jeweilige Führungsnut 19 axial anderenends axial geschlossen, wodurch für den jeweiligen Gleitkörper 37 ein Axialanschlag 32 ausgebildet ist. Zweckmäßig ist dabei der jeweilige Axialanschlag 32 komplementär zu einem in der Führungsnut 19 vorausgehenden Ende 39 des jeweiligen Gleitkörpers 37 geformt. Somit ergibt sich wie in den Figuren 7a und 8a gezeigt eine flächige Kontaktierung zwischen Gleitkörper 37 und Axialanschlag 32.

Bei einer anderen Ausführungsform kann optional zwischen der Klappe 3 und dem Klappengehäuse 2 ein hier nicht gezeigter Drehanschlag ausgebildet sein, der eine Endstellung der Klappe 3, vorzugsweise deren Offenstellung gemäß den Fig. 7c und 8c, definiert, wobei dieser Drehanschlag und der Axialanschlag 32 dann zweckmäßig so aufeinander abgestimmt sind, dass zwischen dem Gleitkörper 37 und dem Axialanschlag 32 ein Restweg verbleibt, wenn die Klappe 3 am Drehanschlag anschlägt. In diesem Fall kann grundsätzlich auch auf den Axialanschlag 32 verzichtet werden, indem beispielsweise die jeweilige Führungsnut 19 an beiden Enden offen ausgestaltet ist.

Zweckmäßig sind das Führungsgehäuse 41 und die Klappenwelle 14 durch ein Integralbauteil realisiert, das beispielsweise spritzgeformt ist. Zweckmäßig ist das Führungsgehäuse 41 aus einem reibungsreduzierten Kunststoff hergestellt, so dass die Führungsflächen 20 eine entsprechend reibungsreduzierte Oberfläche besitzen. Die Gleitkörper 37 und die Antriebswelle 11 können in Form eines Integralbauteils realisiert sein, beispielsweise mittels Spritzgusstechnik. Zweckmäßig sind die Gleitkörper 37 aus einem reibungsreduzierten Kunststoff hergestellt, wodurch die Gleitflächen 22 eine entsprechend reibungsarme Oberfläche besitzen.

Wie bereits weiter oben erläutert, ist zur Drehmomentabstützung zwischen der Antriebswelle 11 und dem Druckdosengehäuse 18 eine Linearführung 26 vorgesehen, die zweckmäßig zwei längsverlaufende Nuten 28 bzw. Längsnuten 28 aufweist. Gemäß den Figuren 3 und 5 sind diese Längsnuten 28 an der Antriebswelle 11 einander diametral gegenüberliegend angeordnet. Die damit zusammenwirkenden Federn 27 bewirken die Abstützung der Antriebswelle 11 am Druckdosengehäuse 18 und können im Folgenden daher auch als Stützkörper 27 bezeichnet werden. Bevorzugt ist nun eine Ausführungsform, bei der gemäß den Figuren 3 und 4 die beiden Gleitkörper 37 und die beiden Längsnuten 28 in der Umfangsrichtung 23 der Antriebswelle 11 um 90° zueinander versetzt angeordnet sind. Hierdurch ergibt sich eine besonders kompakte Bauform bei einfacher Herstellbarkeit für die Antriebswelle 11, welche die Längsnuten 28 und die Gleitkörper 37 integral aufweist. Zweckmäßig sind die Stützkörper 27 integral am Druckdosengehäuse 18 bzw. an dessen Deckel 30 ausgeformt. Ferner kann vorgesehen sein, dass die Stützkörper 27 und/oder die Antriebswelle 11 aus einem reibungsreduzierten Kunststoff hergestellt sind. Reibungsreduzierte Kunststoffe können beispielsweise mit Teflon modifizierte Kunststoffe sein. Insbesondere kann es sich hierbei um Polytetrafluorethylen (PTFE) handeln.

Gemäß der in Figur 2 gezeigten Ausführungsform kann das Klappengehäuse 2 zumindest zwei Kanalabschnitte 7 aufweisen bzw. umschließen, die parallel zur Schwenkachse 10 nebeneinander angeordnet sind. Die Klappenwelle 14 trägt dann für jeden Kanalabschnitt 7 jeweils eine Klappe 3, mit deren Hilfe dann der jeweilige Kanalabschnitt 7 steuerbar ist. Im Beispiel der Figur 2 sind genau zwei Kanalabschnitte 7 vorgesehen. Die Klappenwelle 14 trägt genau zwei Klappen 3 zum Steuern der beiden Kanalabschnitte 7. Gemäß Figur 2 ist die Klappenwelle 14 zwischen den beiden Klappen 3 am Klappengehäuse 2 gelagert. Hierzu weist die Klappenwelle 14 einen weiteren Lagerabschnitt 44 auf, der in einen weiteren Lagerbereich 45 des Klappengehäuses 2 eingesetzt ist. Hierdurch wird eine mittlere Lagerstelle 40 gebildet, die sich im Beispiel der Figur 2 etwa mittig der Klappenwelle 14 befindet.

Die jeweilige Klappe 3 ist hier als Schmetterlingsklappe konzipiert, die hinsichtlich ihrer Kontur komplementär zur Geometrie des durchströmbaren Querschnitts 9 geformt ist.

Die Klappenwelle 14 besitzt distal und proximal zur Stelleinrichtung 4 jeweils einen Lagerabschnitt 48, der bevorzugt eine kreis-zylindrische Außenkontur besitzt. Der jeweilige Lagerabschnitt 48 ist dabei in einen Lagerbereich 49 des Gehäuses 2 bzw. des Kanalabschnitts 7 parallel zur Axialrichtung 8 eingesetzt. In den Beispielen ist die jeweilige Klappe 3 mit ihrer Klappenwelle 14 und dem Führungsgehäuse 41 integral aus einem Stück hergestellt. *****

## Patentansprüche

1. Kopplungseinrichtung zum Koppeln einer ersten Welle (14) mit einer koaxial zur ersten Welle (14) ausgerichteten zweiten Welle (11), derart, dass die Kopplungseinrichtung (5) lineare Bewegungen (12) der einen Welle (11) in Drehbewegungen (15) der anderen Welle (14) umwandelt,
- wobei die Kopplungseinrichtung (5) ein Führungsgehäuse (41) mit einer sich koaxial zu den Wellen (11, 14) schraubenförmig erstreckenden Schraubenführung (36) aufweist, die wenigstens eine im Führungsgehäuse (41) ausgebildete, schraubenförmige Führungsnut (19), die zwei einander zugewandte Führungsflächen (20) besitzt, und wenigstens einen in die Führungsnut (19) eingreifenden Gleitkörper (37) aufweist,
- wobei das Führungsgehäuse (41) mit der einen Welle (11 oder 14) und der jeweilige Gleitkörper (37) mit der anderen Welle (14 oder 11) drehfest verbunden ist,
- wobei der jeweilige Gleitkörper (37) komplementär zur jeweiligen Führungsnut (19) schraubenförmig ausgerichtet ist und zwei voneinander abgewandte Gleitflächen (22) zur flächigen Anlage an einer der Führungsflächen (20) aufweist,
**dadurch gekennzeichnet, dass** parallel zur Schwenkachse (10) der jeweilige Gleitkörper (37) maximal halb so groß ist wie die jeweilige Führungsnut (19).

2. Kopplungseinrichtung nach Anspruch 1, **dadurch gekennzeichnet, dass** die jeweilige Führungsnut (19) axial einenends zum axialen Einführen des jeweiligen Gleitkörpers (37) axial offen ist und axial anderenends zum Ausbilden eines Axialanschlags (32) für den jeweiligen Gleitkörper (37) axial geschlossen ist.

3. Kopplungseinrichtung nach Anspruch 2, **dadurch gekennzeichnet, dass** der jeweilige Axialanschlag (32) komplementär zu einem in der Führungsnut (19) vorausgehenden Ende (39) des jeweiligen Gleitkörpers (37) geformt ist.

4. Kopplungseinrichtung nach einem der Ansprüche 1 bis 3, **dadurch gekennzeichnet, dass** die Antriebswelle (11) durch einen Wandabschnitt (24) eines Gehäuses (18) der Stelleinrichtung (4) hindurchgeführt ist, wobei zwischen dem Wandabschnitt (24) und der Antriebswelle (11) eine drehmomentabstützende Linearführung (26) ausgebildet ist.

5. Klappeneinrichtung zum Steuern einer Fluidströmung einer Brennkraftmaschine,
- mit einem Klappengehäuse (2), das wenigstens einen von der Fluidströmung in einer Axialrichtung (8) durchströmbaren Kanalabschnitt (7) in einer Umfangsrichtung (6) umschließt,
- mit wenigstens einer Klappe (3), die zum Steuern eines durchströmbaren Querschnitts (9) des Kanalabschnitts (7) um eine quer zur Axialrichtung (8) verlaufende Schwenkachse (10) im Klappengehäuse (2) verschwenkbar angeordnet ist,
- mit einer Stelleinrichtung (4) zum Antreiben der Klappe (3), die eine linear verstellbare Antriebswelle (11) aufweist,
- mit einer Kopplungseinrichtung (5) nach einem der vorhergehenden Ansprüche, die eine drehfest mit der Klappe (3) verbundene, koaxial zur Schwenkachse (10) verlaufende Klappenwelle (14) mit der koaxial zur Schwenkachse (10) ausgerichteten Antriebswelle (11) koppelt, derart, dass sie lineare Bewegungen (12) der Antriebswelle (11) in Drehbewegungen (15) der Klappenwelle (14) umwandelt.

6. Klappeneinrichtung nach Anspruch 5, **dadurch gekennzeichnet, dass** zwischen der Klappe (3) und dem Klappengehäuse (2) ein Drehanschlag ausgebildet ist, der eine Endstellung der Klappe (3) definiert, wobei der Drehanschlag und der Axialanschlag (32) so aufeinander abgestimmt sind, dass zwischen dem Gleitkörper (37) und dem Axialanschlag (32) ein Restweg verbleibt, wenn die Klappe (3) am Drehanschlag anschlägt.

7. Klappeneinrichtung nach Anspruch 5 oder 6, **dadurch gekennzeichnet,**
- **dass** das Klappengehäuse (2) wenigstens zwei solche Kanalabschnitte (7) umschließt, die parallel zur Schwenkachse (10) nebeneinander angeordnet sind,
- **dass** die Klappenwelle (14) axial hintereinander wenigstens zwei Klappen (3) zum Steuern je eines der Kanalabschnitte (7) trägt,
- **dass** die Klappenwelle (14) zwischen den Klappen (3) in einer am Klappengehäuse (2) ausgebildeten Lagerstelle (40) gelagert ist.

8. Klappeneinrichtung nach einem der Ansprüche 5 bis 7,
**dadurch gekennzeichnet,**
**dass** die Klappenwelle (14) aus dem Klappengehäuse (2) herausgeführt ist und außerhalb des Klappengehäuses (2) über die Kopplungseinrichtung (5) mit der Antriebswelle (11) gekoppelt ist.

9. Klappeneinrichtung nach einem der Ansprüche 5 bis 8,
**dadurch gekennzeichnet,**
**dass** das Führungsgehäuse (41) bezüglich der Schwenkachse (10) axial zwischen dem Klappengehäuse (2) und einem Gehäuse (18) der Stelleinrichtung (4) angeordnet ist.

10. Klappeneinrichtung nach einem der Ansprüche 5 bis 9,
**dadurch gekennzeichnet,**
- **dass** die Stelleinrichtung (4) als Druckdose (16) ausgestaltet ist, die in einem Druckdosengehäuse (18) einen Steuerraum (19) aufweist, der durch eine elastische Membran (20) begrenzt ist, die fest mit der Antriebswelle (11) verbunden ist, wobei das Druckdosengehäuse (18) einen mit dem Steuerraum (19) fluidisch verbundenen Steueranschluss (21) aufweist, über den der Steuerraum (19) zum Verstellen der Membran (20) mit einem Überdruck oder mit einem Unterdruck beaufschlagbar ist,
- **dass** das Druckdosengehäuse (18) einen Grundkörper (29) und einen Deckel (30) aufweist, der eine der Klappe (3) zugewandten Montageöffnung (31) des Grundkörpers (29) verschließt, und
- **dass** der Deckel (30) integral am Klappengehäuse (2) ausgeformt ist.

11. Klappeneinrichtung nach einem der Ansprüche 5 bis 10,
**dadurch gekennzeichnet,**
- **dass** ein Gehäuse (18) der Stelleinrichtung (4) über eine Verbindung mit dem Klappengehäuse (2) verbunden ist und mittels dieser Verbindung beabstandet vom Kanalabschnitt (7) angeordnet ist,
- **dass** diese Verbindung durch wenigstens zwei Stege (35) oder durch einen Hohlkörper gebildet ist,
- **dass** die Kopplungseinrichtung (5) zwischen den Stegen (35) oder im Inneren des Hohlkörpers angeordnet ist.

## Claims

1. Coupling device for coupling a first shaft (14) to a second shaft (11) aligned coaxially to the first shaft (14), in such a way that the coupling device (5) converts linear movements (12) of the one shaft (11) into rotational movement (15) of the other shaft (14),
- wherein the coupling device (5) has a guide housing (41) having a screw guide (36) extending coaxially to the shafts (11, 14) in a helical manner, said screw guide having at least one helical guide groove (19) formed in the guide housing (41), said guide groove having two guide surfaces (20) facing towards each other, and at least one sliding body (37) engaging with the guiding groove (19),
- wherein the guide housing (41) is connected non-rotationally to the one shaft (11 or 14) and the respective sliding body (37) to the other shaft (14 or 11),
- wherein the respective sliding body (37) is aligned helically in a complementary manner to the respective guide groove (19) and has two sliding surfaces (22) facing away from each other for surface contact with one of the guide surfaces (20),
**characterised in that**,
in parallel to the pivot axis (10), the respective sliding body (37) is a maximum of half as big as the respective guide groove (19).

2. Coupling device according to claim 1, **characterised in that** the respective guide groove (19) is open axially at one end axially for the axial introduction of the respective sliding body (37) and is closed axially at the other end axially for the formation of an axial stop (32) for the respective sliding body (37).

3. Coupling device according to claim 2, **characterised in that** the respective axial stop (32) is formed in a complementary manner to an end (39) of the respective sliding body (37) leading into the guide groove (19).

4. Coupling device according to one of claims 1 to 3, **characterised in that** the drive shaft (11) is guided through a wall section (24) of a housing (18) of the setting device (4), wherein a torque-supporting linear guide (26) is formed between the wall section (24) and the drive shaft (11).

5. Valve device for controlling a fluid flow of a combustion engine,
- having a valve housing (2) which encloses, in a peripheral direction (6), at least one channel section (7) able to be flowed through by the fluid flow in an axial direction (8),
- having at least one valve (3) which is arranged to be able to pivot about a pivot axis (10) running transversely to the axial direction (8) in the valve housing (2) to control a cross section (9) of the channel section (7) able to be flowed through,
- having a setting device (4) for driving the valve (3) which has a linearly adjustable drive shaft (11),
- having a coupling device (5) according to one of the preceding claims, which couples a valve shaft (14) connected non-rotationally to the valve (3) and running coaxially to the pivot axis (10) to the drive shaft (11) aligned coaxially to the pivot axis (10), in such a way that it converts linear movements (12) of the drive shaft (11) into rotational movements (15) of the valve shaft (14).

6. Valve device according to claim 5, **characterised in that** a rotational stop is formed between the valve (3) and the valve housing (2) which defines an end point of the valve (3), wherein the rotational stop and the axial stop (32) are adjusted with respect to each other such that a remaining distance remains between the sliding body (37) and the axial stop (32) if the valve (3) stops at the rotational stop.

7. Valve device according to claim 5 or 6, **characterised in that**
- the valve housing (2) encloses at least two such channel sections (7) which are arranged in parallel to the pivot axis (10) one next to the other,
- the valve shaft (14) bears at least two valves (3) axially one behind the other for controlling one of the channel sections (7) respectively,
- the valve shaft (14) is mounted between the valves (3) in a mounting position (40) formed on the valve housing (2).

8. Valve device according to one of claims 5 to 7, **characterised in that** the valve shaft (14) is guided out from the valve housing (2) and is coupled to the drive shaft (11) outside the valve housing (2) via the coupling device (5).

9. Valve device according to one of claims 5 to 8, **characterised in that** the guide housing (41) is arranged axially with regard to the pivot axis (10) between the valve housing (2) and a housing (18) of the setting device (4).

10. Valve device according to one of claims 5 to 9, **characterised in that**
- the adjustment device (4) is designed as a pressure cell (16) which has a control chamber (19) in a pressure cell housing (18),said control chamber being delimited by an elastic membrane (20) which is connected fixedly to the drive shaft (11), wherein the pressure cell housing (18) has a control connection (21) connected fluidly to the control chamber (19), via said control connection the control chamber (19) is able to be impinged with an excess pressure or with a vacuum for adjusting the membrane (20),
- the pressure cell housing (18) has a basic body (29) and a cover (30) which seals an assembly opening (31) of the basic body (29) facing towards the valve (3), and
- the cover (30) is formed to be integral on the valve housing (2).

11. Valve device according to one of claims 5 to 10, **characterised in that**
- a housing (18) of the setting device (4) is connected to the valve housing (2) via a connection and is arranged at a distance from the channel section (7) by means of this connection,
- this connection is formed by at least two bars (35) or by a hollow body,
- the coupling device (5) is arranged between the bars (35) or in the interior of the hollow body.

## Revendications

1. Dispositif de couplage servant à coupler un premier arbre (14) à un deuxième arbre (11) orienté de manière coaxiale par rapport au premier arbre (14) de telle manière que le dispositif de couplage (5) transforme des mouvements linéaires (12) de l'un arbre (11) en des mouvements de rotation (15) de l'autre arbre (14),
- dans lequel le dispositif de couplage (5) présente un boîtier de guidage (41) avec un guidage de vis (36) s'étendant de manière à présenter une forme hélicoïdale de manière coaxiale par rapport aux arbres (11, 14), lequel guidage de vis présente au moins une rainure de guidage (19) de forme hélicoïdale réalisée dans le boîtier de guidage (41), laquelle possède deux surfaces de guidage (20) tournées l'une vers l'autre, et au moins un corps coulissant (37) venant en prise avec la rainure de guidage (19),
- dans lequel le boîtier de guidage (41) est relié de manière solidaire en rotation à l'un arbre (11 ou 14) et le corps coulissant (37) respectif, à l'autre arbre (14 ou 11),
- dans lequel le corps coulissant (37) respectif est orienté de manière à présenter une forme hélicoïdale de manière complémentaire à la rainure de guidage (19) respective et présente deux surfaces coulissantes (22) opposées l'une à l'autre destinées à venir en appui en surface au niveau d'une des surfaces de guidage (20),
**caractérisé en ce**
**que** parallèlement à l'axe de pivotement (10), le corps coulissant (37) respectif est au maximum égal à la moitié de la rainure de guidage (19) respective.

2. Dispositif de couplage selon la revendication 1, **caractérisé en ce que** la rainure de guidage (19) respective est ouverte axialement de manière axiale au niveau d'une extrémité afin d'introduire de manière axiale le corps coulissant (37) respectif et est fermée axialement de manière axiale au niveau de l'autre extrémité afin de réaliser une butée axiale (32) pour le corps coulissant (37) respectif.

3. Dispositif de couplage selon la revendication 2, **caractérisé en ce que** la butée axiale (32) respective est formée de manière complémentaire à une extrémité (39) qui précède dans la rainure de guidage (19) du corps coulissant (37) respectif.

4. Dispositif de couplage selon l'une quelconque des revendications 1 à 3, **caractérisé en ce que** l'arbre d'entraînement (11) est guidé au travers d'une section de paroi (24) d'un boîtier (18) du dispositif de réglage (4), dans lequel un guidage linéaire (26) supportant le couple de rotation est réalisé entre la section de paroi (24) et l'arbre d'entraînement (11).

5. Dispositif à clapet servant à commander un écoulement de fluide d'un moteur à combustion interne,
- avec un boîtier de clapet (2), qui renferme dans une direction périphérique (6) au moins une section de canal (7) pouvant être traversée par l'écoulement de fluide dans une direction axiale (8),
- avec au moins un clapet (3), qui est disposé de manière à pouvoir pivoter dans le boîtier de clapet (2) autour d'un axe de pivotement (10) s'étendant de manière transversale par rapport à la direction axiale (8) afin de commander une section transversale (9) pouvant être traversée par un flux de la section de canal (7),
- avec un dispositif de réglage (4) servant à entraîner le clapet (3), qui présente un arbre d'entraînement (11) pouvant être ajusté de manière linéaire,
- avec un dispositif de couplage (5) selon l'une quelconque des revendications précédentes, qui couple un arbre de clapet (14) relié de manière solidaire en rotation au clapet (3), s'étendant de manière coaxiale par rapport à l'axe de pivotement (10) à l'arbre d'entraînement (11) orienté de manière coaxiale par rapport à l'axe de pivotement (10) de telle manière qu'il transforme des mouvements linéaires (12) de l'arbre d'entraînement (11) en des mouvements de rotation (15) de l'arbre de clapet (14).

6. Dispositif à clapet selon la revendication 5, **caractérisé en ce qu'**est réalisée entre le clapet (3) et le boîtier de clapet (2), une butée rotative qui définit une position finale du clapet (3), dans lequel la butée rotative et la butée axiale (32) sont adaptées l'une à l'autre de telle sorte qu'il reste entre le corps coulissant (37) et la butée axiale (32), un trajet restant quand le clapet (3) vient buter contre la butée rotative.

7. Dispositif à clapet selon la revendication 5 ou 6, **caractérisé en ce**
- **que** le boîtier à clapet (2) renferme au moins deux sections de canal (7) de ce type, lesquelles sont disposées les unes à côté des autres de manière parallèle par rapport à l'axe de pivotement (10),
- **que** l'arbre de clapet (14) supporte, les uns derrière les autres de manière axiale, au moins deux clapets (3) servant à commander respectivement une des sections de canal (7),
- **que** l'arbre de clapet (14) est monté entre les clapets (3) dans un emplacement de palier (40) réalisé au niveau du boîtier de clapet (2).

8. Dispositif à clapet selon l'une quelconque des revendications 5 à 7,
**caractérisé en ce**
**que** l'arbre de clapet (14) est guidé de manière à sortir du boîtier de clapet (2) et est couplé à l'arbre d'entraînement (11) par l'intermédiaire du dispositif de couplage (5) à l'extérieur du boîtier de clapet (2).

9. Dispositif à clapet selon l'une quelconque des revendications 5 à 8,
**caractérisé en ce**
**que** le boîtier de guidage (41) est disposé par rapport à l'axe de pivotement (10) de manière axiale entre le boîtier de clapet (2) et un boîtier (18) du dispositif de réglage (4).

10. Dispositif à clapet selon l'une quelconque des revendications 5 à 9,
**caractérisé en ce**
- **que** le dispositif de réglage (4) est configuré sous la forme d'un contenant sous pression (16), qui présente dans un boîtier de contenant sous pression (18) un espace de commande (19), qui est délimité par une membrane (20) élastique, qui est reliée de manière solidaire à l'arbre d'entraînement (11), dans lequel le boîtier de contenant sous pression (18) présente un raccord de commande (21) relié de manière fluidique à l'espace de commande (19), par l'intermédiaire duquel l'espace de commande (19) peut être soumis à l'action d'une surpression ou d'une dépression afin d'ajuster la membrane (20),
- **que** le boîtier de contenant sous pression (18) présente un corps de base (29) et un couvercle (30), qui ferme une ouverture de montage (31), tournée vers le clapet (3), du corps de base (29), et
- **que** le couvercle (30) est formé d'un seul tenant au niveau du boîtier de clapet (2).

11. Dispositif à clapet selon l'une quelconque des revendications 5 à 10,
**caractérisé en ce**
- **qu'**un boîtier (18) du dispositif de réglage (4) est relié au boîtier de clapet (2) par l'intermédiaire d'une liaison et est disposé à distance de la section de canal (7) au moyen de ladite liaison,
- **que** ladite liaison est formée par au moins deux entretoises (35) ou par un corps creux,
- **que** le dispositif de couplage (5) est disposé entre les entretoises (35) ou dans l'espace intérieur du corps creux.
